# EUROPEAN PATENT SPECIFICATION

(11) **EP 3 358 759 B1**
(45) Date of publication and mention of the grant of the patent: **29.07.2020**
(21) Application number: 17155033.8
(22) Date of filing: 07.02.2017
(51) Int. Cl.: H04B 7/204, H04B 7/185

(54) **METHOD TO DETERMINE THE POSITION IN TIME OF A SYNCHRONIZATION SIGNAL AND TRANSMISSION SYSTEM CARRYING OUT SUCH A METHOD**
VERFAHREN ZUR BESTIMMUNG DER ZEITLICHEN POSITION EINES SYNCHRONISIERUNGSSIGNALS UND ÜBERTRAGUNGSSYSTEM ZUR DURCHFÜHRUNG SOLCH EINES VERFAHRENS
PROCÉDÉ DE DÉTERMINATION DE LA POSITION DANS LE TEMPS D'UN SIGNAL DE SYNCHRONISATION ET D'UN SYSTÈME DE TRANSMISSION METTANT EN UVRE UN TEL PROCÉDÉ

(43) Date of publication of application: 08.08.2018
(73) Proprietor: Eutelsat S.A., 75015 Paris (FR)
(72) Inventor: FELTRIN, Eros, 91370 Verrières le Buisson (FR)
(74) Representative: Cabinet Camus Lebkiri

(56) References cited:
- US-A1- 2013 329 630
- US-A1- 2016 204 854
- HAN HAN ET AL: "QoS-equilibrium slot allocation for beam hopping in broadband satellite communication systems", WIRELESS NETWORKS, ACM, 2 PENN PLAZA, SUITE 701 - NEW YORK USA, vol. 21, no. 8, 2 April 2015 (2015-04-02), pages 2617-2630, XP035576369, ISSN: 1022-0038, DOI: 10.1007/S11276-015-0934-Z [retrieved on 2015-04-02]

## Description

### FIELD OF THE DISCLOSURE

The present disclosure relates to the field of communication, in particular, to a method to determine the position in time of a synchronization signal triggering a change of beam switching time plan within a spacecraft payload. The present disclosure also related to a transmission system implementing said method.

### DESCRIPTION OF THE RELATED ART

The beam hopping is a technique allowing a multi-beam satellite to allocate in time its resources (power and band) to different beams or groups of beams. In such a way the same resource will be "distributed" in time over a large service area, assuring instantaneous performances of a small beam. In the case of high-throughput spacecraft, the groups of beams are selected in a fixed trellis composing the multi-spot coverage. In some advanced generic flexible payloads such as the Eutelsat Quantum Program, the spot beams are not fixed but the spacecraft is able to switch a single beam from one direction to another. For example, this can be achieved by means of electronic steering antennas. Replacing the beam to different geographical positions is equivalent to distribute the spacecraft resources over the different positions of the entire service area. We will refer here to this specific implementation of beam hopping. In Han, H., Zheng, X., Huang, Q. et al. Wireless Netw (2015) 21: 2617 (https://doi.org/10.1007/s11276-015-0934-z) for instance, they describe such a hopping technique and a method to properly allocate the beam to the different coverage areas.

However, such a technique requires tight time synchronization between a gateway on the ground and the payload of the spacecraft, which his possible only if the transmission is formatted into a periodic structure. For example, taking DVB-S2x (i.e. ETSI ES 302 307 Part 2 Annex E) as a reference waveform, the main aspect of the standard is the definition of a fix length super frame composed in this case of 612540 symbols. Beam hopping is based on a repetition of this structure organized in a beam switching time plan, which is composed of a sequence of ordered super frames assigned, in turn and periodically, to a pre-defined coverage area. From the payload perspective, the beam switching time plan is seen as a set of parameters including (but not limited to):
- the beam forming coefficients used by the antennas on board the satellite (actually these coefficients are preloaded on the satellite);
- the duration of the illumination of each coverage area (dwell time);
- the sequence of illuminated coverage areas; and
- a predetermined epoch to change beam switching time plan.

The time synchronization between the gateway on the ground and the payload of the spacecraft is achieved through an acquisition and tracking procedure. However, due to some hardware constraints in the payload, the uncertainty between the instant at which the gateway requires a change in the beam switching time plan and the instant at which the command is received and applied by the payload is of the order of hundreds of milliseconds, which is very high compared with the duration of the beam switching time plan. For example, if the transmission rate is 230 MSym/s and assuming a beam switching time plan composed of 5 super frames, the duration of the entire beam switching time plan is 13.3ms, i.e. much smaller than the uncertainty indicated above.

In order to deal with such a large uncertainty, it has been necessary to define a time structure with a much longer period having an absolute precision. Therefore, for each network, it has been defined a counter, the synchronization signal counter, which duration (the synchronization signal period) is an integer multiple of the duration of the applied beam switching time plan. The name synchronization signal counter is due to the fact that any beam switching time plan change required by the ground gateway will be applied only at the end of this counter when a signal, the synchronization signal is generated in the payload control bus in order to synchronize the uplink and downlink antennas. The synchronization signal period is an integer multiple of the beam switching time plan duration (and consequently it is an integer multiple of a super frame duration). So, any new beam switching time plan change request must join the payload at least an interval of time equivalent to the uncertainty before the end of the synchronization signal counter. Even with this uncertainty, the new beam switching time plan will be applied only to the end of the current synchronization signal period. When the synchronization signal counter reaches the end a synchronization signal is generated and propagated within the payload via its control bus: such a synchronization signal triggers the execution/application of the new beam switching time plan in the uplink and the downlink antennas.

In order to allow such a scheme, a ground synchronization counter is kept synchronized with the synchronization signal counter of the spacecraft payload. In order to synchronize the ground synchronization counter with the synchronization signal counter, it has been proposed to drop the level of the downlink signal to the gateway correspondingly to the beginning of the synchronization signal period, i.e. at the reset of the synchronization signal counter.

This can be done by applying a new beam switching time plan with modified antenna amplitude coefficients leading to a variation of the signal level observed on the ground. A reference receiver placed on the gateway would detect this variation, deciding that it corresponds to the generation of a synchronization signal. Such a procedure should be applied only during the initial acquisition phase. However, such a method relies on parameters that can be strongly impacted by external events (in particular weather conditions). Moreover, since the level variation does not take into account the operational link budget, once the synchronization signal acquisition has been completed an operational beam switching time plan with operational levels has to be loaded in order to avoid any impact on the user traffic and therefore the method cannot be used in a synchronization signal tracking/maintenance procedure. Therefore, there is a need for a method allowing the synchronization between the ground synchronization counter and the synchronization signal counter that does not rely on parameters that can be influenced by external parameters (such as the weather). There is also a need for such a method that would also allow the tracking/maintenance of said synchronization.

### SUMMARY

The object of the invention is solved by the features of the independent claims. Preferred embodiments are given in the dependent claims. In order to solve the problems mentioned above, a first aspect of the invention concerns a method to determine the position in time of a synchronization signal triggering within a spacecraft payload comprised in a spacecraft a switching between a first beam switching time plan and a second beam switching time plan implemented on ground by a transmission system, the transmission system comprising a ground gateway comprising means to send a signal to the spacecraft payload, said signal comprising a continuous sequence of super frames, each super frame being associated to a number *SFNᵢ*, a reference receiver comprising means to receive the signal from said spacecraft payload in a reference coverage area, a communication channel allowing the ground gateway to transmit to the spacecraft a change request in order to switch from one beam switching time plan to another.

The method comprises the steps of:
- sending a change request of beam switching time plan to the spacecraft in order for the spacecraft payload to switch from the first beam switching time plan to the second switching time plan, a ground synchronization counter being reset to zero simultaneously and the ground gateway starting transmitting following the second beam switching time plan, the change request comprising the beam switching time plan requested, the corresponding synchronization signal period and a predetermined time at which the change of beam switching time plan should occur, called epoch time ;
- for each super frame of the signal sent to the spacecraft, inserting the number *SFNᵢ* associated to the super frame and generated by the ground synchronization counter into the said super frame, the ground synchronization counter being incremented for each super frame ;
- for each super frame received by the reference receiver from the spacecraft payload, comparing the value of *modulo* (*SFNⱼ*,*length*(*BSTP*1)) + 1 to an expected pattern, *SFNⱼ* being the number associated to the received super frame and *length(BSTP1)* being the length in super frame units of the second beam switching time plan, the expected pattern depending on the number of frames received in the reference coverage area for the second beam switching time plan and the position of the reference coverage area in the said beam switching time plan ;
- when the values calculated by the reference receiver match the expected pattern, determining the synchronization signal position in time and resetting the ground synchronization counter to a predetermined value based on the synchronization signal position.

Thanks to the method described above, it is therefore possible to synchronize the ground synchronization counter with the synchronization signal counter without relying on parameters that can be influenced by external parameters. It is meant by "match the expected pattern" that the expected pattern is observed for at least two consecutive beam switching time plans. The expression "resetting the ground synchronization counter to a predetermined value based on the synchronization signal position" not only means that the ground synchronization counter is reset but also that any shift in the super frame transmission is corrected.

In one embodiment, the method comprises, after determining the synchronization signal position in time and resetting the ground synchronization counter, the step of:
- sending a second change request of beam switching time plan to the spacecraft in order for the spacecraft payload to switch from the second beam switching time plan to a third switching time plan at an epoch2 time ;
- for each super frame of the signal sent to the spacecraft, inserting the number *SFNᵢ* associated to the super frame and generated by the ground synchronization counter into the said super frame, the ground synchronization counter being incremented for each super frame and reset to zero when it reaches the synchronization signal period corresponding to the second beam switching time plan or the epoch2 - Δ1 time where Δ1 is the transmission delay between the ground gateway and the spacecraft;
- for each super frame received by the reference receiver from the spacecraft payload starting from epoch2 + Δ2 where Δ2 is the transmission delay between the spacecraft (SC) and the reference receiver (RR), comparing the value of *modulo* (*SFNⱼ*,*length*(*BSTP*2)) + 1 to an expected pattern, *SFNⱼ* being the number associated to the received super frame and *length(BSTP2)* being the length in super frame units of the third beam switching time plan, the expected pattern depending on the number of frames received in the reference coverage area for the third beam switching time plan and the position of the reference coverage area in the said beam switching time plan;
- if the values calculated by the reference receiver match the expected pattern, confirming the synchronization with the synchronization signal counter.

Hence, it is possible to confirm the good synchronization between the ground synchronization counter and the synchronization signal counter. It should be noted that when the ground synchronization counter reach the synchronization signal period corresponding to the second beam switching time plan, it is reset to zero and incremented again up to the synchronization signal period corresponding to the second beam switching time plan, while when the time reaches the epoch2 - Δ time, it is reset to zero and incremented again up to the synchronization signal period corresponding to the third beam switching time plan.

In one embodiment, the transmission system further comprises one user terminal, and the method comprises, after determining the synchronization signal position in time and resetting the ground synchronization counter and/or confirming the synchronization with the synchronization signal, the steps of:
- for each super frame received by the user terminal from the spacecraft payload, comparing the value of *modulo* (*SFNⱼ*,*length*(*BSTPi*)) + 1 to an expected pattern, *SFNⱼ* being the number associated to the received super frame and *length(BSTPi)* being the length in super frame units of the beam switching time plan used by the payload, the expected pattern depending on the number of frames received in the coverage area in which is located the user terminal for the beam switching time plan used by the payload and the position of the said coverage area in the said beam switching time plan;
- if the values calculated by the user terminal match the expected pattern, reporting to the ground gateway the good synchronization of the ground synchronization counter with the synchronization signal counter.

Hence, it is possible to use the user terminal to monitor the synchronization between the ground synchronization counter and the signal synchronization counter. Furthermore, this monitoring can be done while the transmission system is working and does not necessitate interrupting the data transmission to the user terminals.

In one embodiment, the number of frames received in the reference coverage area for the first beam switching time plan is different from the number of frames received in the reference coverage area for the second beam switching time plan and/or the length in super frame units of the first beam switching time plan is different from the length in super frame units of the second beam switching time plan.

Hence, it is possible to avoid false lock which can happen, in particular if the expected pattern is observed during the last beam switching time plan occurrence while the gateway is emitting according to the new beam switching time plan whereas the payload is emitting according to the old beam switching time plan.

In one embodiment, the expected pattern is given by the series number *modulo*(*α* + *β* + *k*, *length*(*BSTPi*)) + 1 where k goes from 0 to the number of frames received in the coverage area considered minus one and *length(BSTPi)* is the length in super frame units of the beam switching time plan considered, *α* being a positive integer corresponding to the shift in super frame unit induced by the reset of the ground beam switching time plan, *β* being a positive integer, represented in number of superframes SF and starting from zero, depending on the expected position of the reference coverage area in the beam switching time plan.

Hence, it is possible to obtain the shift in superframe units in the transmission. It should be noted that when the ground synchronization counter and the synchronization signal counter are synchronized, the integer *α* is equal to zero since there is no shift induced by the reset.

In one embodiment, the step of determining the synchronization signal position in time and resetting the ground synchronization counter to predetermined value based on the synchronization signal position also comprises delaying by α super frames or anticipating by [*length*(*BSTP*1) - *α*] superframes the signal sent by the ground gateway. Hence, it is possible to correct the shift in superframe units in the signal emitted by the ground gateway.

A second aspect of the present invention concerns a transmission system comprising a ground gateway comprising means to send a signal to the spacecraft payload, said signal comprising a continuous sequence of super frames, each super frame being associated to a number *SFNᵢ*, a reference receiver comprising means to receive the signal from said spacecraft payload in a reference coverage area, a communication channel allowing the ground gateway to transmit to the spacecraft any request to change from one beam switching time plan to another, said transmission system comprising means for carrying out the method according to the first aspect of the present invention.

A third aspect of the invention concerns a computer program product comprising instructions to cause the device according to the second aspect of the invention to execute the steps of the method according to the first aspect of the invention.

A fourth aspect of the invention concerns a computer-readable medium having stored thereon the computer program according to the third aspect of the invention.

### BRIEF DESCRIPTION OF THE DRAWINGS

- The figure 1 shows a flowchart illustrating a first embodiment of the invention.
- The figure 2 shows a schematic of a transmission system communicating with a spacecraft.
- The figure 3 shows a state diagram of a transmission system according to one embodiment of the invention.
- The figures 4A and 4B show a schematic representation of the first and the second beam switching time plan according to one embodiment of the invention.
- The figure 5A and 5B show two curves illustrating the transition between a first beam switching time plan and a second beam switching time plan according to one embodiment of the invention.
- The figure 6 shows a schematic of a transmission system according to one embodiment of the invention.

### DETAILED DESCRIPTION OF EMBODIEMENTS

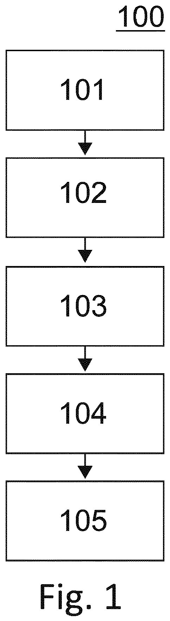

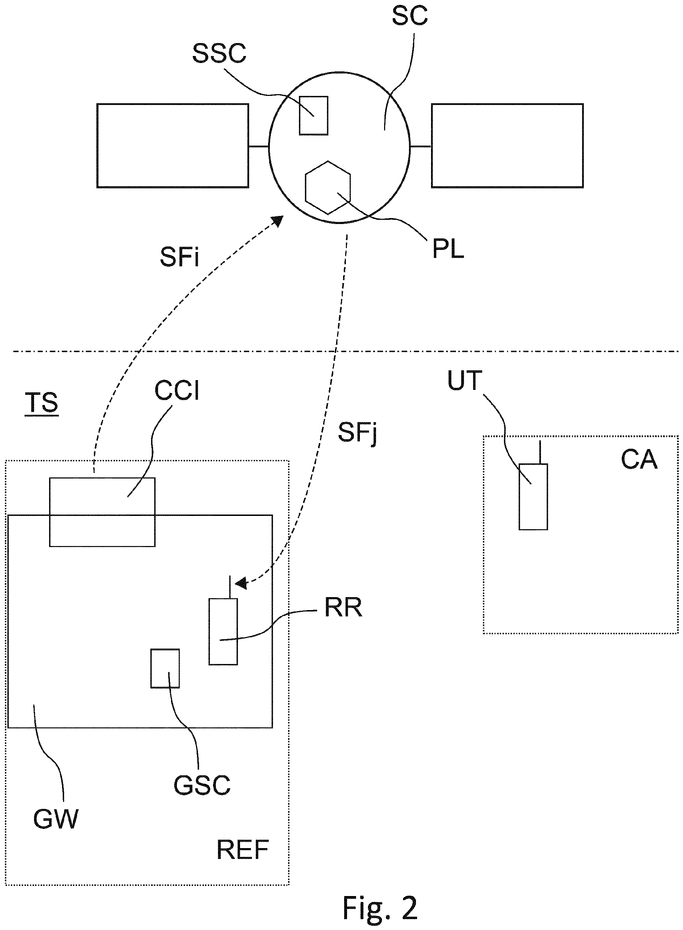

In a first embodiment illustrated in figure 1, the invention concerns a method 100 to determine the position in time of a synchronization signal SS triggering within a spacecraft payload PL comprised in a spacecraft SC a switching between a first beam switching time plan BSTPO and a second beam switching time plan BSTP1 implemented on the ground by a transmission system TS. The method allows the transmission system TS to go from a state where the synchronization signal counter SSC needs to be acquired to a state where said counter is acquired and need to be maintained. As described in figure 2, the transmission system TS comprises a ground gateway GW comprising means to send a signal to the spacecraft payload PL, said signal comprising a continuous sequence of super frames SFi, each super frame SFi being associated with a number *SFNᵢ*, a reference receiver RR comprising means to receive the signal from said spacecraft payload PL in a reference coverage area REF, a communication channel allowing the ground gateway GW to transmit to the spacecraft SC a change request in order to switch from one beam switching time plan BSTPi to another. In one embodiment, the transmission system TS can also comprise user terminals UT located in different coverage areas CA. In one embodiment, the ground gateway GW loads the second beam switching time plan BSTP1 into the payload spacecraft SC in advance, for instance through a device creating a command channel in which case the procedure is asynchronous. In one embodiment, the second beam switching time plan BSTP1 and the change request are sent simultaneously, in which case the new beam switching time plan BSTP1 needs to be loaded in the payload before executing the change request. In the following, a super frame sent by the ground gateway GW is labelled SFi while a super frame received by the reference receiver RR is labelled SFj. The time needed for a signal sent by the ground gateway GW to reach the spacecraft is equal to Δ1 while the time needed for a signal send by the spacecraft SC to reach the reference receiver is equal to Δ2. It should be noted that, when the reference receiver RR is integrated to the ground gateway GW, these two delays are equal. These transmission delays are known by the transmission system TS. The time needed by the spacecraft to take into account a change request is also known by the transmission system TS.

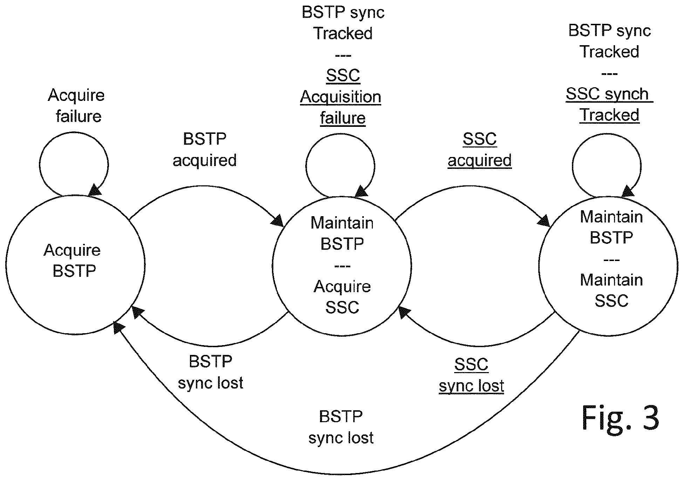

As illustrated in figure 3, the transmission system can be in three different states:
- a first state in which both the beam switching time plan BSTPi and the synchronization signal counter SSC need to be acquired. This state is not further described here;
- a second state in which the beam switching time plan BSTPi has been acquired but the synchronization signal counter SSC still need to be acquired;
- a third state in which both the beam switching time plan BSTPi and the synchronization signal counter SSC have been acquired.

In the above, what is meant by "the beam switching time plan is acquired" is that the ground gateway GW is already synchronous with the payload PL and that the reference receiver RR is able to receive with no corruption all and only the super frames SFj transmitted to the reference coverage area REF. The arrows describe actions that have to be undertaken to go from one state to the next one. Actions that are not underlined correspond to actions that are known and that will not be described further in the present description. The underlined actions are the ones that are described here and undertaken using a method according to the invention. Furthermore, at the beginning of the method according to the invention, the system is considered to be in the second state which means that the synchronization signal needs to be acquired.

The method 100 comprises a step of sending 101 a change request of beam switching time plan BSTP to the spacecraft SC in order for the spacecraft payload PL to switch from the first beam switching time plan BSTP0 to the second switching time plan BSTP1, a ground synchronization counter GSC being reset to zero simultaneously and the GW starting transmitting following the second beam switching time plan BSTP1. In one embodiment, the change request is sent to a control channel interface CCI acting as control interface between the gateway GW and the spacecraft SC. The change request comprises (but is not limited to) the beam switching time plan requested BSTP1, the corresponding synchronization signal period SS1P and a predetermined time at which the change of beam switching time plan should occur, called epoch time. This predetermined epoch is based on a well-known local time (GPS or UTC) at the gateway and on the payload PL. Since in the first acquisition phase the synchronization signal counter SSC reset point is unknown, this predetermined epoch is necessarily wrong. Only at the end of this synchronization procedure the ground gateway GW will be able to predetermine precisely such an epoch time.

In the following, UTC stands for Coordinated Universal Time, popularly known as GMT (Greenwich Mean Time), or Zulu time. Local time differs from UTC by the number of hours of the time zone. GPS time stands for Global Positioning System time and is the atomic time scale implemented by the atomic clocks in the GPS ground control stations and the GPS satellites themselves. GPS time was zero at Oh 6-Jan-1980.

The method 100 further comprises a step of, for each super frame SFi of the signal sent to the spacecraft SC, inserting 102 the number *SFNᵢ* associated with the super frame SFi and generated by the ground synchronization counter GSC into the said super frame SFi, the ground synchronization counter GSC being incremented for each super frame SFi. Therefore, the ground synchronization counter GSC is kept synchronous with the transmitted super frames and steps from 0 to the synchronization signal period SS1P. For instance, if the synchronization signal period SS1P is equal to N in super frame SFi unit, the ground synchronization counter GSC will step from 0 to N-1 and so will the number *SFNᵢ* associated with the super frame SFi. Once the ground synchronization counter GSC reaches N-1, it will be reset to zero so that the ground synchronization counter loops from 0 to N-1.

The method further comprises, for each super frame SFj received by the reference receiver RR from the spacecraft payload PL, a step of comparing 103 the value of *modulo* (*SFNⱼ*,*length*(*BSTP*1)) + 1 to an expected pattern, *SFNⱼ* being the number associated to the received super frame SFj and *length(BSTP1)* being the length in super frame SFi units of the second beam switching time plan BSTP1, the expected pattern depending on the number of frames received in the reference coverage area REF_SF1 for the second beam switching time plan BSTP1 and the position of the reference coverage area REF in the second beam switching time plan BSTP1.

In one embodiment, the expected pattern is given by the series of numbers *modulo*(*α* + *β* + *k, length*(*BSTPi*)) + 1 where k goes from 0 to the number of frames received in the coverage area considered REF_SF1 minus one and *length(BSTPi)* is the length in super frame units of the second beam switching time plan BSTP1, *α* and *β* being positive integers. The value of *α* depends on the shift in super frame SFi units induced by the ground synchronization counter GSC reset while the value of *β* correspond to the position, represented in number of super frames SF and starting from zero, of the reference coverage area in the beam switching time plan. For instance, if the first super frame received by the reference coverage area is the first super frame of the beam switching time plan BSTP then *β* is equal to zero while if the first super frame received by the reference coverage area is the third super frame of the beam switching time plan BSTP then *β* is equal to two.

The method further comprises, when the values calculated by the reference receiver RR match the expected pattern, the step of determining 104 the synchronization signal SS position in time and resetting 105 the ground synchronization counter GSC to a predetermined value based on the synchronization signal position. Indeed, the transmission system TS knows when the change of switching time plan occurred on the spacecraft SC. Since this change corresponds to the reset of the synchronization signal counter SSC on the spacecraft SC, the transmission system TS can reset its own ground synchronization counter accordingly. Therefore, the steps described above allow to detect a synchronization signal counter SSC acquisition failure (if the expected pattern is not observed) and to acquire said synchronization signal counter SSC, which means that, at the end of the steps just described, the transmission system is on the third state of figure 3.

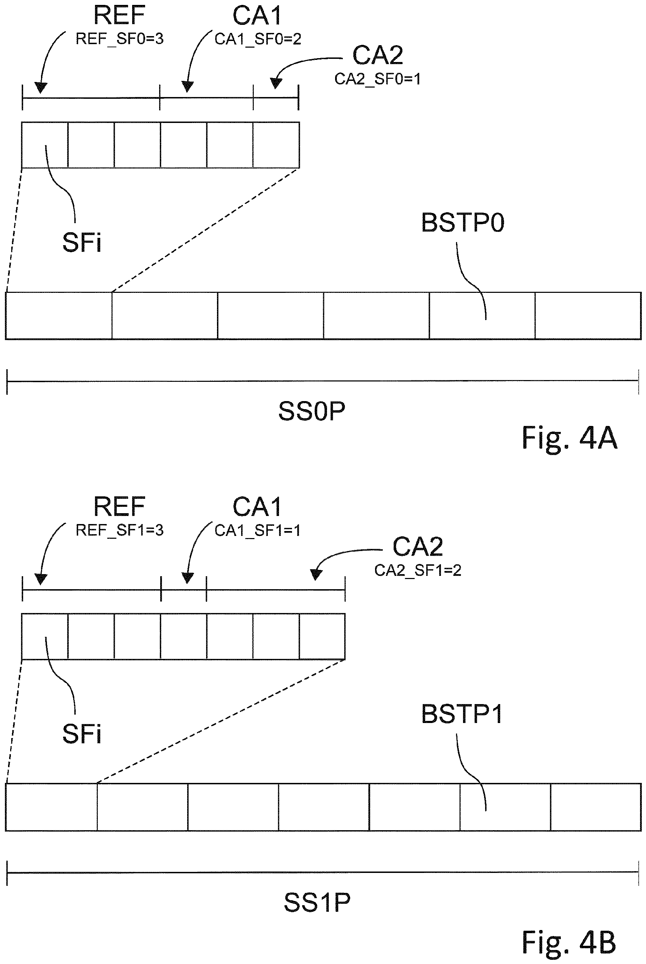

An illustration of a method according to the first embodiment is given in tables 1 to 3 (see below) and figures 4A and 4B. As illustrated in figure 4A, the first beam switching time plan BSTP0 comprises six super frames SFi and the reference coverage area REF receives the first three super frames SFi of each beam switching time plan BSTP0. Furthermore, the synchronization signal period SSOP associated with the first switching time plan BSTP0 is equal to 6 beam switching time plans BSTP0. As illustrated in figure 4B, the second beam switching time plan BSTP1 comprises seven super frames SFi and the reference coverage area REF receives the first three super frames of each beam switching time plan BSTP1. Furthermore, the synchronization signal period SS1P associated with the second switching time plan BSTP1 is equal to 7 beam switching time plans BSTP1. It has to be noted that the method does not depend on where, within the first or second beam switching time plan BSTP0, BSTP1, is placed the reference coverage area REF. In the examples given in the present description, for simplicity, it is considered that the reference area REF is placed, in time, at the beginning of each beam switching time plan BSTPi meaning that the reference coverage area REF receives the first super frame SFj or the first super frames of each beam switching time plan BSTPi.

In the tables 1 to 3 below, the first line of each table corresponds to the number *SFNⱼ* associated with each super frame SFj received on ground and the gray columns represent the super frames SFj received by the reference receiver RR located in the reference coverage area REF. Beam switching time plans BSTPi are separated by solid lines. As explained previously, in the present case the number of superframes SFj received by the reference receiver RR is the same for both beam switching time plan BSTPO,BSTP1 and equal to 3 (but they could be different without affecting the working principle of the invention). The "modulo" line represents *modulo* (*SFNⱼ*,*length*(*BSTPi*)) + 1 where *i* is equal to 0 (zero) for the table 1, and 1 (one) for tables 2 and 3.

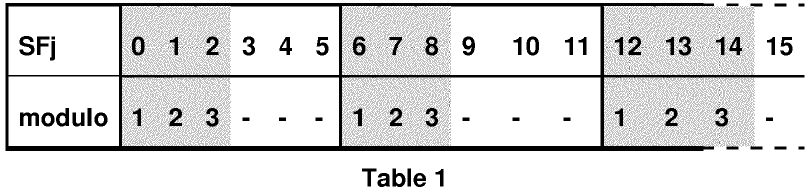

The table 1 illustrates an initial phase where the reference receiver RR receives super frames SFj according to a first beam switching time plan BSTP0. The "modulo" line represents *modulo* (*SFNⱼ*,*length*(*BSTP*0)) + 1 and follows the pattern (1, 2, REF_SF0) where REF_SF0 is on the number of superframes SFj received in the reference coverage area REF. In this case, the number of superframes SFj received in the reference coverage area REF is equal to 3. In this initial state, the ground gateway GW is already synchronous with the payload PL which means that the reference receiver RR is able to receive with no corruption all and only the superframes SFj transmitted to the reference coverage area REF. Furthermore, the gateway GW knows the synchronization signal period SSOP (but does not know yet when the counter starts and/or ends) and the transmission delay. It is also important to note that at this stage, there is no assumption about the synchronization signal counter SSC on the payload PL apart from the fact that such counter exists and that it consists of a counter in super frames SFi. As we can see in the last columns of the table 1, the last occurrence of the first beam switching time plan BSTP0 is incomplete: it contains only four super frames SFj. The last two super frames of the said occurrence are received while the transmission system TS is in the second phase described in table 2.

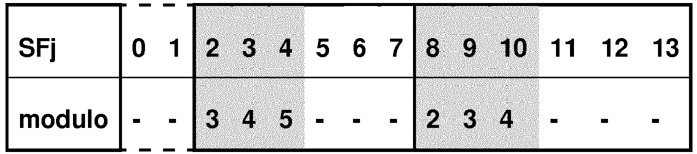

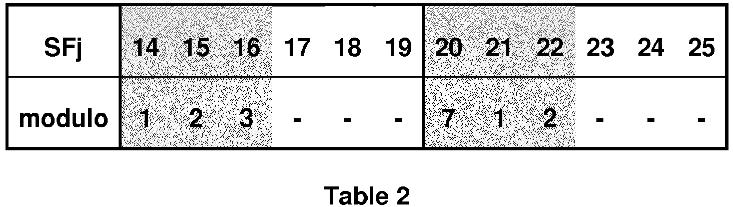

The table 2 represents the phase where the ground gateway GW just sent a change request and starts to transmit according to the second beam switching time plan BSTP1 while the payload PL did not yet execute the change request and continues to emit according to the first switching time plan BSTP0, which means six super frames by beam switching time plan BSTP0. The last two super frames SFj of the last occurrence of the first beam switching time plan starting in table 1 are present in the first two columns. As shown in table 2, the ground synchronization counter GSC was reset to zero and so is the number *SFNⱼ* associated with each super frame SFj received by the reference receiver RR. In this stage, the "modulo" line represents *modulo* (*SFNⱼ*,*length*(*BSTP*1)) + 1 and the pattern observed is always different and therefore does not match the expected pattern.

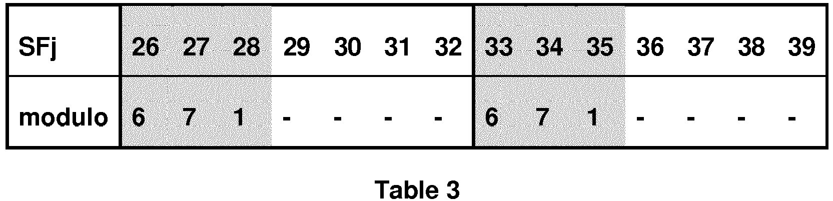

The table 3 represents the phase where the change request has been taken into account by the spacecraft payload PL and the ground gateway GW and the payload PL emit according to the second beam switching time plan BSTP1. In this state, the "modulo" line still represents *modulo* (*SFNⱼ*,*length*(*BSTP*1)) + 1 but contrary to what was seen on table 2, the pattern observed is always the same : (6, 7, 1) - (6, 7, 1). Knowing that the number of super frames received by the reference receiver REF_SF1 is equal to 3 (three), the pattern is equal to (*modulo*(*α + β*,*length*(*BSTP*1)) + 1,.., *modulo*(*α* + *β* + *REF_SF*1 - 1, *length*(*BSTP*1)) + 1) where *α* is equal to 5 and *β* is equal to 0, the first super frames of the beam switching time plan being received by reference coverage area. The transmission system TS is now able to detect that the payload PL has taken into account the change request and can reset the ground synchronization counter GSC accordingly. This detection is performed by observing a constant expected pattern during at least two consecutive beam switching time plans. In the present case, the transmission system TS knows that the first super frame SFi of the table 3 should have been associated to the number 0 instead of 26, and can reset the ground synchronization counter GSC to take into account this shift in super frame unit. Furthermore, the offset induced by the fact that the change request CR and therefore the reset of the ground synchronization counter GSC was performed in the middle of an occurrence of the first beam switching time plan BSTP0 can be corrected by delaying by *α* super frames or anticipating by [*length*(*BSTP*1) - *α*] super frames SFi the transmission.

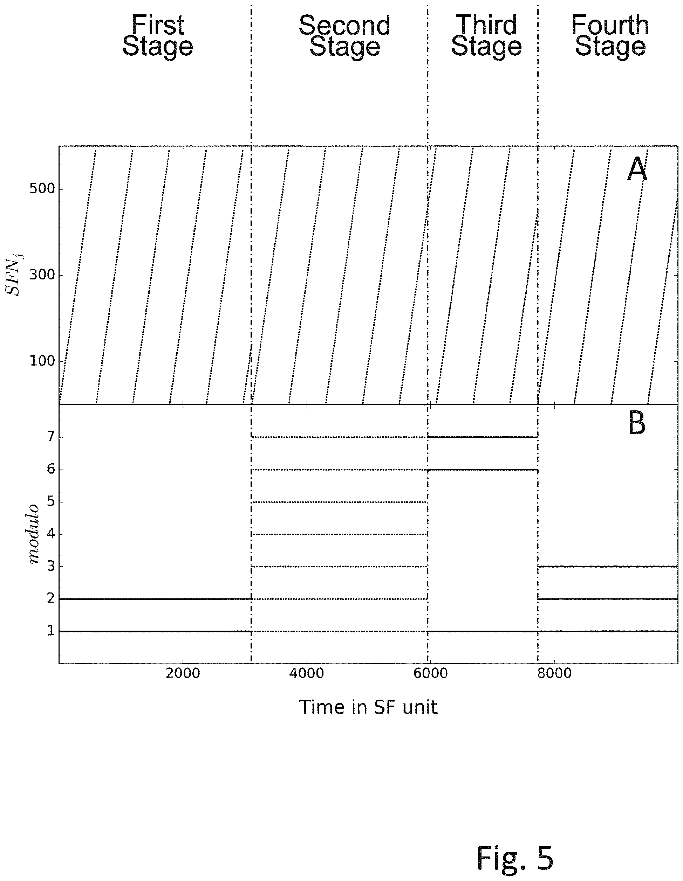

The example illustrated on tables 1 to 3 and figures 4A and 4B is meant to be an illustrative example. A more realistic example is shown in figures 5A and 5B. In this example, the number of frames REF_SF0 received in the reference coverage area for the first beam switching time plan BSTP0 is different from the number of frames REF_SF1 received in the reference coverage area for the second beam switching time plan BSTP1 and the length in super frame units of the first beam switching time plan BSTP0 is different from the length in super frame units of the second beam switching time plan BSTP0. Choosing different values for the number of superframes REF_SF received in the reference coverage area REF and/or the beam switching time plan length permits to avoid false lock. A false lock can happen if the expected pattern is observed during the last beam switching time plan BSTP occurrence while the gateway is emitting according to the new beam switching time plan whereas the payload is emitting according to the old beam switching time plan. Such a situation is ambiguous and could lead to an erroneous synchronization of one beam switching time plan. If, for instance, the number of superframes REF_SF received in the reference coverage area REF is not the same for the old and the new switching time plan, such situation cannot occur since the expected pattern will have a number of numbers different from the one observed while the payload emits according to the old switching time plan.

The figure 5A represents number *SFNⱼ* associated to the super frame SFj according to time (in super frame units). The figure 5B represents the "modulo": *modulo* (*SFNⱼ*,*length(BSTPi))* + 1 where *i* is equal to 0 (zero) for the first stage and 1 (one) for the second stage, the third and the fourth stage.

The first stage corresponds to a situation where both the ground gateway GW and the payload PL follow a first beam switching time plan BSTP0. As it can be seen from the figure 5B, the number of superframes REF_SF0 received by the receiver is equal to two and the "modulo" pattern is (1, 2). During this stage, the ground synchronization counter GSC and therefore the number *SFNⱼ* associated to the super frame SFj, is reset to zero each time the said counter reaches a value equal to the synchronization signal period SS0P.

The second stage corresponds to a situation where the ground gateway GW just sent a change request, reset the ground synchronization counter GSC and starts to emit according to the second beam switching time plan BSTP1 while the payload PL did not yet execute the change request and continues emitting according to the first switching time plan BSTP0. As shown in the figure 4B, the "modulo" pattern is not constant anymore and changes for each beam switching time plan BSTP1. As it can be seen from the multiple resets, the ground synchronization counter GSC resets several times proving that this stage can last several synchronization signal period SS1P. In the present case, the counter was reset four times which means that the change request took more than four synchronization signal period SS1P to be taken into account. There is not a strong constraint on the delay between the change request and its effect. However, this delay has to be known with an uncertainty in time inferior, preferably largely inferior, to the synchronization signal period SS1P considered.

The third stage corresponds to a situation where the ground gateway GW and the payload PL emit according to the second beam switching time plan BSTP1. As it can be seen from the figure 5B, the number of super frames received by the reference receiver is equal to 3 and the "modulo" pattern is (6, 7, 1). Knowing that the number of super frames received by the reference receiver REF_SF1 is equal to 3 (three), the pattern is equal to (*modulo*(*α* + *β*,*length*(*BSTP*1)) + 1,.., *modulo*(*α* + *β* + *REF_SF*1 - 1,*length*(*BSTP*1)) + 1) where *α* is equal to 5 and *β* is equal to 0, the first super frames of the beam switching time plan being received by reference coverage area. Once again, the transmission system TS is now able to detect that the payload PL has just taken into account the change request and can reset the ground synchronization counter GSC accordingly.

The fourth stage corresponds to a situation where the ground synchronization counter GSC has been reset to a predetermined value (here zero) according to the position of the synchronization signal SS. In one embodiment, the reset of the ground synchronization counter GSC, once the synchronization signal SS position is known, also include a shift in the superframe transmission in order for the content of the superframe to match the corresponding coverage area. In the present case, *α* is equal to 5 which means that the superframe transmission was modified by delaying by 5 super frames or anticipating by [*length*(*BSTP*1) - 5] superframes SFi the signal sent by the ground gateway GW. At this point it is assumed that the gateway GW can determine the local time (GPS or UTC) at which a new change request will be applied by the payload PL; any change request will be referred to the correct local time.

Once the ground synchronization counter GSC is synchronized with the synchronization signal counter SSC of the payload PL, it can be convenient to make sure that this synchronization was performed correctly. In order to assess this synchronization, in a third embodiment of the present invention, the method comprises, after determining the synchronization signal SS position in time and resetting the ground synchronization counter GSC, the step of sending a second request referred to a predetermined time, called epoch2 (this time computed with no errors except the uncertainty indicated above) to change beam switching time plan to the spacecraft SC in order for the spacecraft payload PL to switch from the second beam switching time plan BSTP1 to a third beam switching time plan.

The method also comprises, for each super frame SFi of the signal sent to the spacecraft SC, the step of inserting the number *SFNᵢ* associated with the super frame SFi and generated by the ground synchronization counter GSC into the said super frame SFi, the ground synchronization counter GSC being incremented for each super frame SFi and reset to zero when it reaches the synchronization signal period SS1P corresponding to the second beam switching time plan BSTP1 or the epoch2 - Δ1 time. It is important to note here that if the ground counter GSC and the synchronization signal counter SC are synchronized, they should reset at the same time. It also means that the value of *α* which represents the shift in super frame units induced by the ground synchronization counter should be equal to zero in the expected pattern. Additionally, since the synchronization signal period SS1P is known by the GW, the epoch2 predetermined on ground corresponds exactly to the instant at which the payload PL switch from the second beam switching time plan BSTP1 to the third beam switching time plan. At this epoch2, both the gateway GW and the payload PL reset the related ground synchronization counter GSC and synchronization signal counter SSC and both increases up to synchronization signal period SS2P. So, pattern observed by the reference receiver should evolve from the pattern (1, ..., REF_SF1) to the pattern (1, ..., REF_SF2) where REF_SF2 is the number of frames received in the reference coverage area REF by the reference receiver RR for the third beam switching time plan. In one embodiment, the third beam switching time plan is identical to the first beam switching time plan BSTP0.

In order to check if this condition is met, the method comprises, for each super frame SFj received by the reference receiver RR from the spacecraft payload PL starting from epoch2 + Δ2 time, comparing the value *modulo* (*SFNⱼ*,*length*(*BSTP*2)) + 1 to the expected pattern (1, ..., REF_SF2), *SFNⱼ* being the number associated to the received super frame SFj and *length(BSTP2)* being the length in super frame SFi units of the third beam switching time plan, the expected pattern depending on the number of frames REF_SF2 received in the reference coverage area REF by the reference receiver RR for the third beam switching time plan and the position of the reference coverage area REF in the third beam switching time plan. If the values calculated by the reference receiver RR match the expected pattern, the method comprises a step of confirming the synchronization of the ground synchronization counter GSC with the synchronization signal SS.

Once the synchronization between the ground synchronization counter GSC and the synchronization signal counter SSC is done and/or confirmed, it can be advantageous to be able to monitor this synchronization without affecting the normal working mode of the transmission system TS. In order to perform this monitoring, in a fourth embodiment of the invention, the transmission system TS further comprises one user terminal UT. Furthermore, the method comprises, after confirming the synchronization of the ground synchronization counter GSC with the synchronization signal SS, for each super frame SFj received by the user terminal UT from the spacecraft payload PL, the step of comparing the value of *modulo* (*SFNⱼ*,*length*(*BSTPi*)) + 1 to an expected pattern, *SFNⱼ* being the number associated to the received super frame SFj and *length(BSTPi)* being the length in super frame SFi units of the beam switching time plan BSTPi used by the payload PL to send said super frame SFj, the expected pattern depending on the number of frames CA_SFi received in the coverage area CA in which the user terminal UT is located for the beam switching time plan BSTPi used by the payload PL and the position of the said coverage area CA in the beam switching time plan BSTPi used by the payload PL. The method also comprises the report of the confirmation by the user terminal UT that the expected pattern is matched. If the expected pattern is not matched the terminal is not allowed to transmit anymore and the ground gateway GW, after a time-out will consider the loss of synchronization of the ground synchronization counter GSC with the synchronization signal SS. The report can be done by the user terminal UT through the return link status. Using this method, it is therefore possible to monitor the synchronization between the ground synchronization counter GSC and the synchronization signal counter SSC. It should be noted that this monitoring is done by the user terminal UT or user terminals while they receive actual data. Therefore, this can be done while the transmission system TS is working and does not necessitate interrupting the data transmission to the user terminals. Therefore, the steps described above allow to track the synchronization signal counter SSC synchronization and to make sure that the transmission system TS is still on the third state of figure 3.

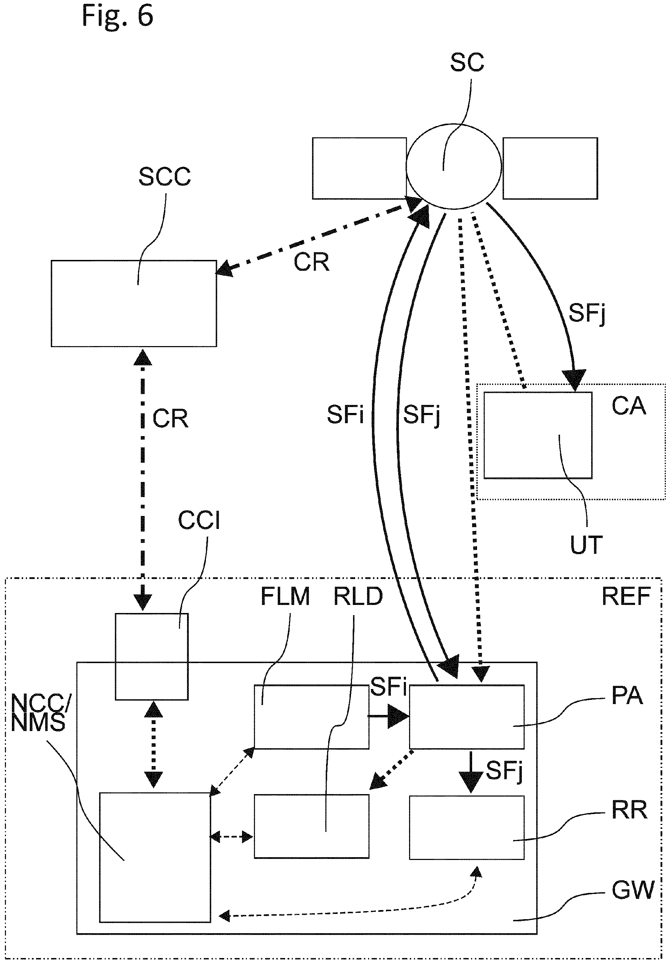

In a fifth embodiment illustrated in figure 6, the invention concerns a transmission system TS comprising a ground gateway GW comprising means to send a signal to the spacecraft payload PL, said signal comprising a continuous sequence of super frames SFi, each super frame SFi being associated to a number *SFNᵢ*. In the illustrated example, a forward link modulator FLM send the signal through a parabolic antenna PA to the spacecraft SC. Such a forward link modulator FLM has interfaces to control in real time the symbol rate (for synchronization purposes), to inject data traffic or control information (as for example the ground synchronization counter GSC) and reset or delay the super frames sequence. An example of super-frame format is given by the DVB-S2x standard. The functionalities of this interface are an extension of the functionalities that any commercial modulator must provide in order to allow the control of the dynamic bandwidth and modcod (Modulation and Coding) allocation. The forward link modulator FLM is controlled by a network control center and network management system NCC/NMS. The network control center and network management system NCC/NMS has the general role of managing the entire system and therefore controls the different components of the gateway GW as well as the ground synchronization counter GSC.

The gateway further comprises a reference receiver RR comprising means to receive the signal from said spacecraft payload PL in a reference coverage area REF. In the illustrated example, the signal coming from the spacecraft SC is received by the parabolic antenna PA and then transmitted to the reference receiver RR. The reference receiver RR is based on a demodulator compatible with the framing format of the forward link modulator FLM (e.g. DVB-S2x). The reference receiver RR is configured to compute and detect the timing error during the beam switching time plan BSTP synchronization phase (not described) and will compute the received pattern and check if it matches the expect pattern during the synchronization between the ground signal counter GSC and the synchronization signal counter SSC, and the necessary messages alerting faults or acquisition of the synchronization. Its interface is connected to the network control center and network management system NCC/NMS.

The ground gateway GW further comprises a communication channel allowing the ground gateway GW to transmit to the spacecraft SC any request of changing from one beam switching time plan BSTP to another. In the illustrated example, the network control center and network management system NCC/NMS sends the change request CR to a control channel interface CCI which in turns send this change request CR to a satellite control center which in turn sends it to the spacecraft SC. More generally, the control channel interface CCI acts as a translator of the messages coming from the network control center and network management system NCC/NMS and the satellite control center SCC.

The transmission system TS further comprises means for carrying out a method to determine the position in time of a synchronization signal SS according to previous embodiments. In the illustrated example, the network control center and network management system NCC/NMS are configured to send a change request CR of beam switching time plan BSTP to the spacecraft SC in order for the spacecraft payload PL to switch from the first beam switching time plan BSTP0 to the second switching time plan BSTP1, a ground synchronization counter GSC being reset simultaneously, the change request comprising the beam switching time plan requested BSTP1, the corresponding synchronization signal period SS1P and a predetermined epoch to change beam switching time plan BSTP.

The forward link modulator FLM is configured to insert, for each super frame SFi of the signal sent to the spacecraft SC, the number *SFNᵢ* associated to the super frame SFi and generated by the ground synchronization counter GSC into the said super frame SFi, the ground synchronization counter GSC being incremented for each super frame SFi. In the transmission system shown in figure 6, the super frames are then sent to spacecraft SC using the parabolic antenna PA.

The reference receiver RR is configured to compare, for each super frame SFj received by said reference receiver RR from the spacecraft payload PL, the value of *modulo* (*SFNⱼ*, *length*(*BSTP*1)) + 1 to an expected pattern, *SFNⱼ* being the number associated to the received super frame SFj and *length(BSTP1)* being the length in super frame SFi units of the second beam switching time plan BSTP1, the expected pattern depending on the number of frames REF_SF1 received in the reference coverage area REF for the second beam switching time plan BSTP1 and the position of the reference coverage area REF in the said beam switching time plan BSTP1.

Furthermore, when the values calculated by the reference receiver RR match the expected pattern, the network control center and network management system NCC/NMS is configured to determine 104 the synchronization signal SS position in time and resetting 105 the ground synchronization counter GSC accordingly.

As illustrated in the figure 6, in one embodiment, the transmission system TS comprises a user terminal UT located in a coverage area CA different from the reference coverage area REF. The user terminal UT comprises means for receiving the signal from the spacecraft SC. It is also configured to compare, for each super frame SFj received by said user terminal UT from the spacecraft payload PL, the value of *modulo* (*SFNⱼ*,*length*(*BSTPi*)) + 1 to an expected pattern, *SFNⱼ* being the number associated to the received super frame SFj and *length(BSTPi)* being the length in super frame SFi units of the beam switching time plan BSTPi used by the payload PL, the expected pattern depending on the number of frames CA_SF, received in the coverage area CA on which is located the user terminal UT for the beam switching time plan BSTPi used by the payload PL and the position of the said coverage area CA in the said beam switching time plan BSTP.

The user terminal UT is also configured to report to the gateway GW the confirmation that the values calculated by the user terminal UT match the expected pattern. On the contrary the terminal is not anymore allowed to transmit and the ground gateway GW will declare the loss of synchronization with the synchronization signal SS, after a time-out during which no confirmation is received. In the example illustrated in figure 6, the user terminal UT comprises means for sending a signal to the gateway GW through the spacecraft SC. The signal sent by the user terminal UT is received by a return link demodulator RLD which is under control of the network control center and network management system NCC/NMS. The signal reporting the state of the synchronization is sent with the normal traffic data.

It should be noted that if in the example described in figure 6 the different elements of the transmission system TS are considered within the gateway GW, they can also be installed in different locations provided that interconnections among them assure a fix and well-known delay and jitter negligible compared with the duration of the super frames.

## Claims

1. Method (100) to determine the position in time of a synchronization signal triggering within a spacecraft payload (PL) comprised in a spacecraft (SC) a switching between a first beam switching time plan (BSTP0) and a second beam switching time plan (BSTP1) implemented on ground by a transmission system (TS), a beam switching time plan (BSTP) being composed of a sequence of ordered super frames (SFi) assigned, in turn and periodically, to a pre-defined coverage area, the transmission system (TS) comprising a ground synchronization counter (GSC), a ground gateway (GW) comprising means to send a signal to the spacecraft payload (PL), said signal comprising a continuous sequence of super frames (SFi), each super frame (SFi) being associated to a number *SFNᵢ*, a reference receiver (RR) comprising means to receive the signal from said spacecraft payload (PL) in a reference coverage area (REF), a communication channel allowing the ground gateway (GW) to transmit to the spacecraft (SC) a change request in order to switch from one beam switching time plan (BSTP) to another, the method comprising the steps of:
- sending (101) a change request of beam switching time plan (BSTP) to the spacecraft (SC) in order for the spacecraft payload (PL) to switch from the first beam switching time plan (BSTP0) to the second switching time plan (BSTP1), resetting to zero a ground synchronization counter (GSC) simultaneously and starting transmitting, by the ground gateway (GW), following the second beam switching time plan (BSTP1), the change request comprising the beam switching time plan requested (BSTP1), the corresponding synchronization signal period (SS1P) and a predetermined time at which the change of beam switching time plan should occur, called epoch time ;
- for each super frame (SFi) of the signal sent to the spacecraft, inserting (102) the number *SFNᵢ* associated to the super frame (SFi) and generated by the ground synchronization counter (GSC) into the said super frame (SFi), incrementing the ground synchronization counter (GSC) for each super frame (SFi) and resetting to zero the ground synchronization counter (GSC) when it reaches the synchronization signal period (SS1P) ;
- for each super frame (SFj) received by the reference receiver (RR) from the spacecraft payload (PL), calculating the value of *modulo* (*SFNⱼ*, *length*(*BSTP*1)) + 1, *SFNⱼ* being the number associated to the received super frame (SFj) and *length*(*BSTP*1) being the length in super frame (SFi) units of the second beam switching time plan (BSTP1);
- for each super frame (SFj) received by the reference receiver (RR) from the spacecraft payload (PL), comparing (103) the value of *modulo* (*SFNⱼ*, *length*(*BSTP*1)) + 1 calculated by the reference receiver to an expected pattern, the expected pattern depending on the number of super frames (REF_SF1) received in the reference coverage area for the second beam switching time plan (BSTP1) and the position of the reference coverage area (REF) in the said beam switching time plan (BSTP1) ;
- when the values calculated by the reference receiver match the expected pattern, determining (104) the synchronization signal position in time and resetting (105) the ground synchronization counter (GSC) to a predetermined value based on the synchronization signal position, wherein resetting the ground synchronization counter (GSC) to the predefined value based on the synchronization signal (SS) position means resetting the ground synchronization counter and correcting any shift in the super frame transmission, a pattern being considered to be matched when said pattern is observed for at least two consecutive beam switching time plans (BSTP).

2. Method according to claim 1 comprising, after determining (104) the synchronization signal position in time and resetting (105) the ground synchronization counter (GSC), the step of:
- sending a second change request of beam switching time plan (BSTP) to the spacecraft (SC) in order for the spacecraft payload (PL) to switch from the second beam switching time plan (BSTP1) to a third switching time plan at a time epoch2 ;
- for each super frame (SFi) of the signal sent to the spacecraft, inserting the number *SFNᵢ* associated to the super frame (SFi) and generated by the ground synchronization counter (GSC) into the said super frame (SFi), incrementing for each super frame (SFi) and resetting to zero the ground synchronization counter (GSC) when it reaches the synchronization signal period (SS1P) corresponding to the second beam switching time plan (BSTP1) or the epoch2 - Δ1 time where Δ1 is the transmission delay between the ground gateway (GW) and the spacecraft (SC) ;
- for each super frame (SFj) received by the reference receiver (RR) from the spacecraft payload (PL) starting from epoch2 + Δ2 where Δ2 is the transmission delay between the spacecraft (SC) and the reference receiver (RR), calculating the value of *modulo* (*SFNⱼ*, *length*(*BSTP*2)) + 1, *SFNⱼ* being the number associated to the received super frame (SFj) and *length(BSTP2)* being the length in super frame (SFi) units of the third beam switching time plan;
- for each super frame (SFj) received by the reference receiver (RR) from the spacecraft payload (PL) starting from epoch2 + Δ2 where Δ2 is the transmission delay between the spacecraft (SC) and the reference receiver (RR), comparing the value of *modulo* (*SFNⱼ*,*length(BSTP2))* + 1 to an expected pattern, the expected pattern depending on the number of super frames received in the reference coverage area for the third beam switching time plan and the position of the reference coverage area (REF) in the said beam switching time plan;
- when the values calculated by the reference receiver (RR) match the expected pattern, confirming the synchronization with a synchronization signal counter (SSC).

3. Method according to claim 1 or claim 2, the transmission system (TS) further comprising one user terminal (UT1,UT2), said method comprising, after determining (104) the synchronization signal position in time and resetting (105) the ground synchronization counter (GSC) and/or confirming the synchronization with the synchronization signal, the steps of:
- for each super frame (SFj) received by the user terminal (UT1,UT2) from the spacecraft payload (PL), calculating the value of *modulo* (*SFNⱼ, length*(*BSTPi*)) + 1, *SFNⱼ* being the number associated to the received super frame (SFj) and *length(BSTPi)* being the length in super frame (SFi) units of the beam switching time plan (BSTPi) used by the payload (PL);
- for each super frame (SFj) received by the user terminal (UT1,UT2) from the spacecraft payload (PL), comparing the value of *modulo* (*SFNⱼ*, *length*(*BSTPi*)) + 1 to an expected pattern, the expected pattern depending on the number of super frames (CA1_SFi, CA2_SFi) received in the coverage area (CA1,CA2) on which is located the user terminal (UT1,UT2) for the beam switching time plan (BSTPi) used by the payload (PL) and the position of the said coverage area (CA1, CA2) in the said beam switching time plan (BSTP);
- when the values calculated by the user terminal (UT1, UT2) match the expected pattern, reporting to the ground gateway (GW) the good synchronization of the ground synchronization counter (GSC) with the synchronization signal counter (SSC).

4. Method according to claim 1, claim 2 or claim 3 in which the number of frames (REF_SF0) received in the reference coverage area for the first beam switching time plan (BSTP0) is different from the number of super frames (REF_SF1) received in the reference coverage area for the second beam switching time plan (BSTP1) and/or the length in super frame units of the first beam switching time plan (BSTP0) is different from the length in super frame units of the second beam switching time plan (BSTP0).

5. Method according to claim 1, claim 2, claim 3 or claim 4 where the expected pattern is given by a series number *modulo*(*α* + *β* + *k*,*length*(*BSTPi*)) + 1 where k goes from 0 to the number of super frames received in the coverage area considered minus one and *length(BSTPi)* is the length in super frame (SFi) units of the beam switching time plan (BSTPi) considered, *α* being a positive integer depending on the shift in position of the coverage area considered in the said beam switching time plan (BSTPi), *β* being a positive integer, represented in number of super frames SF and starting from zero, depending on the expected position of the reference coverage area (REF) in the beam switching time plan (BSTPi).

6. Method according to claim 5 where the step of determining (104) the synchronization signal position in time and resetting (105) the ground synchronization counter (GSC) to the predetermined value based on the synchronization signal position also comprises delaying by α super frames or anticipating by [*length*(*BSTP*1) - *α*] superframes (SFi) the signal sent by the ground gateway (GW).

7. Transmission system (TS) comprising a ground synchronization counter (GSC), a ground gateway (GW) comprising means to send a signal to the spacecraft payload (PL), said signal comprising a continuous sequence of super frames (SFi), each super frame (SFi) being associated to a number *SFNᵢ*, a reference receiver (RR) comprising means to receive the signal from said spacecraft payload (PL) in a reference coverage area (REF), a communication channel allowing the ground gateway (GW) to transmit to the spacecraft (SC) any request of changing from one beam switching time plan (BSTP) to another, said transmission system comprising means for carrying out the method of claim 1 to claim 6.

8. A computer program product comprising instructions to cause the transmission system of claim 7 to execute the steps of the method of claim 1 to claim 6.

9. A computer-readable medium having stored thereon the computer program of claim 8.

## Patentansprüche

1. Verfahren (100) zum Bestimmen der zeitlichen Position eines Synchronisationssignals, das innerhalb einer Raumfahrzeug-Nutzlast (PL) auslöst, die in einem Raumfahrzeug (SC) umfasst ist, einem Schalten zwischen einem ersten Keulenumtastungs-Zeitplan (BSTP0) und einem zweiten Keulenumtastungs-Zeitplan (BSTP1), der auf dem Boden durch ein Übertragungssystem (TS) implementiert wird, wobei ein Keulenumtastungs-Zeitplan (BSTP) aus einer Sequenz aus angeordneten Super-Frames (SF) zusammengesetzt ist, die abwechselnd und periodisch einem vorbestimmten Abdeckungsbereich zugeordnet sind, wobei das Übertragungssystem (TS) einen Boden-Synchronisationszähler (GSC), eine Boden-Gateway (GW) umfasst, die Mittel zum Senden eines Signals an die Raumfahrt-Nutzlast (PL) sendet, wobei das genannte Signal eine kontinuierliche Sequenz von Super-Frames (SFi) umfasst, wobei jeder Super-Frame (SFi) einer Anzahl von *SFNᵢ* zugeordnet ist, wobei ein Referenzempfänger (RR) Mittel zum Empfangen des Signals von der genannten Raumfahrzeug-Nutzlast (PL) in einem Referenz-Abdeckungsbereich (REF) umfasst, wobei ein Kommunikationskanal der Boden-Gateway (GW) das Übertragen einer Änderungsanforderung an das Raumfahrzeug (SC) ermöglicht, um von einem Keulenumtastungs-Zeitplan (BSTP) zum anderen umzuschalten, wobei das Verfahren die Schritte umfasst:
- Senden (101) einer Änderungsanforderung des Keulenumtastungs-Zeitplans (BSTP) an das Raumfahrzeug (SC), damit die Raumfahrzeug-Nutzlast (PL) vom ersten Keulenumtastungs-Zeitplan (BSTP0) zum zweiten Umtastungs-Zeitplan (BSTP1) umschaltet, wobei sie einen Boden-Synchronisationszähler (GSC) gleichzeitig auf null zurücksetzt und das Übertragen durch die Boden-Gateway (GW) dem zweiten Keulenumtastungs-Zeitplan (BSTP1) folgend beginnt, wobei die Änderungsanforderung den angeforderten Keulenumtastungs-Zeitplan (BSTP1), die entsprechende Synchronisations-Signalperiode (SS1P) und eine vorbestimmte Zeit umfasst, zu der die Änderung der Keulenumtastungs-Zeitplan, bezeichnet als Epochenzeit, auftreten soll;
- für jeden Super-Frame (SFi) des an das Raumfahrzeug gesendeten Signals Einfügen (102) der Anzahl *SFi,* die dem Super-Frame (SFi) zugeordnet und vom Boden-Synchronisationszähler (GSC) erzeugt wird, Einfügen in den genannten Super-Frame (SFi), Inkrementieren des Boden-Synchronisationszählers (GSC) für jeden Super-Frame (SFi) und Zurücksetzen auf null des Boden-Synchronisationszählers (GSC), wenn er die Synchronisations-Signalperiode (SS1 P) erreicht;
- für jeden Super-Frame (SFj), der vom Referenzempfänger (RR) von der Raumfahrzeug-Nutzlast (PL) empfangen wird, Berechnen des Wertes des *Modulo (SFNj, Länge (BSTP1)* + 1, wobei *SFNⱼ* die dem empfangenen Super-Frame (SFj) zugeordnete Zahl ist und die *Länge (BSTP1)* die Länge in den Super-Frameeinheiten (SFi-Einheiten) des zweiten Keulenumtastungs-Zeitplans (BSTP1) ist;
- für jeden Super-Frame (SFj), der vom Referenzempfänger (RR) von der Raumfahrzeug-Nutzlast (PL) empfangen wird, Vergleichen (103) des Wertes *Modulo* (*SFNⱼ*, *Länge (BSTP1)*) + 1, der von dem Referenzempfänger berechnet wird, mit einem erwarteten Muster, wobei das erwartete Muster von der Zahl der Super-Frames (REF_SF1), die in dem Referenz-Abdeckungsbereich für den zweiten Keulenumtastungs-Zeitplan (BSTP1) empfangen werden, und der Position des Referenz-Abdeckungsbereichs (REF) in dem genannten Keulenumtastungs-Zeitplan (BSTP1), abhängt;
- wenn die von dem Referenzempfänger berechneten Werte zu dem erwarteten Muster passen, Bestimmen (104) der zeitlichen Synchronisations-Signalposition und Zurücksetzen (105) des Boden-Synchronisationszählers (GSC) auf einen vorbestimmten Wert basierend auf der Synchronisations-Signalposition, wobei das Zurücksetzen des Boden-Synchronisationszählers (GSC) auf den vorbestimmten Wert basierend auf der Synchronisations-Signalposition (SS-Position) das Zurücksetzen des Boden-Synchronisationszählers und das Korrigieren jeglicher Umschaltung in der Super-Frameübertragung bedeutet, wobei ein Muster als passend gilt, wenn das genannte Muster für wenigstens zwei konsekutive Keulenumtastungs-Zeitpläne (BSTP) eingehalten wird.

2. Verfahren gemäß Anspruch 1, umfassend nach dem Bestimmen (104) der zeitlichen Synchronisations-Signalposition und dem Zurücksetzen (105) des Boden-Synchronisationszählers (GSC) den Schritt:
- Senden einer zweiten Änderungsanforderung des Keulenumtastungs-Zeitplans (BSTP) an das Raumfahrzeug (SC), damit die Raumfahrzeug-Nutzlast (PL) vom zweiten Keulenumtastungs-Zeitplan (BSTP1) zu einem dritten Umschalt-Zeitplan zu einer Zeitepoche 2 umschaltet;
- für jeden Super-Frame (SFi) des vom Raumfahrzeug gesendeten Signals Einfügen der Zahl *SFNᵢ*, die dem Super-Frame (SFi) zugeordnet wird und vom Boden-Synchronisationszähler (GSC) erzeugt ist, in den genannten Super-Frame (SFi), Inkrementieren für jeden Super-Frame (SFi) und Zurücksetzen auf Null des Boden-Synchronisationszählers (GSC), wenn er die Synchronisations-Signalperiode (SS1P) erreicht, die dem zweiten Keulenumtastungs-Zeitplan (BSTP1) oder der Epoche 2 - Δ1 Zeit entspricht, wobei Δ1 die Übertragungsverzögerung zwischen der Boden-Gateway (GW) und dem Raumfahrzeug (SC) ist;
- für jeden Super-Frame (SFj), der durch den Referenzempfänger (RR) von der Raumfahrzeug-Nutzlast (PL) erhalten wird, Beginnen von Epoche 2 + Δ2, wobei Δ2 die Übertragungsverzögerung zwischen dem Raumfahrzeug (SC) und dem Referenzempfänger (RR) ist, Berechnen des Wertes des *Modulo* (*SFNⱼ, Länge (BSTP2))* +1, wobei *SFNⱼ* die Zahl ist, die dem empfangenen Super-Frame zugeordnet ist, und die *Länge (BTSP2)* die Länge in den Super-Frame-Einheiten (SFi-Einheiten) des dritten Keulenumtastungs-Zeitplans ist;
- für jeden Super-Frame (SFj), der durch den Referenzempfänger (RR) von der Raumfahrzeug-Nutzlast (PK) empfangen wird, Beginnen von Epoche 2 + Δ2, wobei Δ2 die Übertragungsverzögerung zwischen dem Raumfahrzeug (SC) und dem Referenzempfänger (RR) ist, Vergleichen des Wertes des *Modulo (SFNⱼ*, *Länge (BSTP2))* + 1 mit einem erweiterten Muster, wobei das erweiterte Muster von der Zahl von Super-Frames, die in dem Referenz-Abdeckungsbereich für den dritten Keulenumtastungs-Zeitplan empfangen werden, und der Position des Referenz-Abdeckungsbereichs (REF) in dem genannten Keulenumtastungs-Zeitplan abhängt;
- wenn die vom Referenzempfänger (RR) berechneten Werte zu dem erwarteten Muster passen, bestätigen der Synchronisation mit einem Synchronisations-Signalzähler (SSC).

3. Verfahren gemäß Anspruch 1 oder Anspruch 2, wobei das Übertragungssystem (TS) weiterhin ein Nutzerterminal (UT1, UT2) umfasst, wobei das genannte Verfahren nach dem Bestimmen (104) der zeitlichen Synchronisations-Signalposition und dem Zurücksetzen (105) den Boden-Synchronisationszähler (GSC) und / oder das Bestätigen der Synchronisation mit dem Synchronisationssignal die Schritte umfasst:
- für jeden Super-Frame (SFj), der durch das Nutzer-Terminal (UT1, UT2) von der Raumfahrzeug-Nutzlast (PL) empfangen wird, Berechnen des Wertes des *Modulo (SFNⱼ*, *Länge (BSTPi))* + 1, wobei *SFNⱼ* die dem zugeordneten Super-Frame (SFj) zugeordnete Zahl ist und die *Länge (BSTPi)* die Länge in den Super-Frameeinheiten (SFi-Einheiten) des Keulenumtastungs-Zeitplans (BSTPi) ist, der von der Nutzlast (PL) verwendet wird;
- für jeden Super-Frame (SFj), der durch das Nutzerterminal (UT1, UT2) von der Raumfahrzeug-Nutzlast (PL) empfangen wird, Vergleichen des Wertes des *Modulo (SFNⱼ*, *Länge (BSTPi)*) + 1 mit einem erwarteten Muster, wobei das erwartete Muster von der Zahl der Super-Frames (CA1_SFi, CA2_SFi), die in dem Abdeckungsbereich (CA1, CA2) empfangen werden, auf dem das Nutzerterminal (UT1, UT2) für den Keulenumtastungs-Zeitplan (BTSPi) angeordnet ist, der von der Nutzlast (PL) verwendet wird, und der Position des genannten Abdeckungsbereichs (CA1, CA2) in dem genannten Keulenumtastungs-Zeitplan (BSTP) abhängt;
- wenn die von dem Nutzerterminal (UT1, UT2) berechneten Werte zu dem erwarteten Muster passen, Berichten der einwandfreien Synchronisation des Boden-Synchronisationszählers (GSC) mit dem Synchronisations-Signalzähler (SSC) an die Boden-Gateway (GW).

4. Verfahren gemäß Anspruch 1, Anspruch 2 oder Anspruch 3, bei dem die Zahl der Frames (REF_SF0), die im Referenz-Abdeckungsbereich für den ersten Keulenumtastungs-Zeitplan (BSTP0) empfangen werden, von der Zahl der Super-Frames (REF_SF1), die von dem Referenz-Abdeckungsbereich für den zweiten Keulenumtastungs-Zeitplan (BSTP1) unterschiedlich ist und / oder die Länge in den Super-Frameeinheiten des ersten Keulenumtastungs-Zeitplans (BSTP0) von der Länge in den Super-Frameeinheiten des zweiten Keulenumtastungs-Zeitplans (BSTP0) unterschiedlich ist.

5. Verfahren gemäß Anspruch 1, Anspruch 2, Anspruch 3 oder Anspruch 4, bei dem das erwartete Muster durch eine Serienzahl *Modulo (α* + *β* + *k, Länge (BSTPi))* + 1 angegeben wird, wobei k von 0 zu der Zahl von Super-Frames geht, die in dem betrachteten Abdeckungsbereich minus eins reicht und die *Länge (BSTPi)* die Länge in den Super-Frameeinheiten (SFi-Einheiten) des betrachteten Keulenumtastungs-Zeitplans (BSTPi) ist, wobei α eine positive ganze Zahl ist, die von der Umschaltung in der Position des betrachteten Abdeckungsbereichs in dem genannten Keulenumtastungs-Zeitplan (BSTPi) abhängt, β eine positive ganze Zahl ist, die in der Zahl von Super-Frames SF dargestellt wird und von Null beginnt und von der erwarteten Position des Referenz-Abdeckungsbereichs (REF) im Keulenumtastungs-Zeitplan (BSTPi) abhängt.

6. Verfahren gemäß Anspruch 5, bei dem der Bestimmungsschritt (104) der zeitlichen Synchronisations-Signalposition und das Zurücksetzen (105) des Boden-Synchronisationszählers (GSC) auf den vorbestimmten Wert basierend auf der Synchronisations-Signalposition ebenfalls das Verzögern des von der Boden-Gateway (GW) versandten Signals durch α Super-Frames oder das Vorwegnehmen durch *[Länge (BSTPi)* - *α]* Super-Frames (SFi) umfasst.

7. Übertragungssystem (TS), umfassend einen Boden-Synchronisationszähler (GSC), eine Boden-Gateway (GW), umfassend Mittel zum Senden eines Signals an die Raumfahrzeug-Nutzlast (PL), wobei das genannte Signal eine kontinuierliche Sequenz von Super-Frames (SFi) umfasst, wobei jeder Super-Frame (SFi) einer Zahl *SFNᵢ* zugeordnet ist, wobei ein Referenzempfänger (RR) Mittel zum Empfangen des Signals von der genannten Raumfahrzeug-Nutzlast (PL) in einem Referenz-Abdeckungsbereich (REF) umfasst, wobei ein Kommunikationskanal der Boden-Gateway (GW) das Übertragen jeglicher Änderungsanforderung von einem Keulenumtastungs-Zeitplan (BSTP) zum anderen auf das Raumfahrzeug (SC) ermöglicht, wobei das genannte Übertragungssystem Mittel zum Durchführen des Verfahrens gemäß Anspruch 1 bis Anspruch 6 umfasst.

8. Computer-Programmprodukt, umfassend Anweisungen, um das Übertragungssystem gemäß Anspruch 7 zum Ausführen der Schritte des Verfahrens gemäß Anspruch 1 bis Anspruch 6 zu veranlassen.

9. Computerlesbares Medium, in dem das Computerprogramm gemäß Anspruch 8 gespeichert wird.

## Revendications

1. Procédé (100) pour déterminer la position dans le temps d'un signal de synchronisation déclenchant dans une charge utile (PL) d'engin spatial comprise dans un enfin spatial (SC) une commutation entre un premier plan de temps de commutation de faisceau (BSTP0) et un deuxième plan de temps de commutation de faisceau (BSTP1) mis en œuvre au sol par un système de transmission (TS), un plan de temps de commutation de faisceau (BSTP) étant composé d'une séquence de super-trames (SFi) ordonnées attribuées, à leur tour et de manière périodique, à une zone de couverture prédéfinie, le système de transmission (TS) comprenant un compteur de synchronisation au sol (GSC), une passerelle au sol (GW) comprenant un moyen pour envoyer un signal à la charge utile (PL) d'engin spatial, ledit signal comprenant une séquence continue de super-trames (SFi), chaque super-trame (SFi) étant associée à un nombre *SFNᵢ*, un récepteur de référence (RR) comprenant un moyen pour recevoir le signal provenant de ladite charge utile (PL) d'engin spatial dans une zone de couverture de référence (REF), un canal de communication permettant à la passerelle au sol (GW) de transmettre à l'engin spatial (SC) une demande de changement afin de passer d'un plan de temps de commutation de faisceau (BSTP) à un autre, le procédé comprenant les étapes consistant à :
- envoyer (101) une demande de changement de plan de temps de commutation de faisceau (BSTP) à l'engin spatial (SC) afin que la charge utile (PL) d'engin spatial passe du premier plan de temps de commutation de faisceau (BSTP0) au deuxième plan de temps de commutation de faisceau (BSTP1), remettre à zéro un compteur de synchronisation au sol (GSC) simultanément et démarrer la transmission, par la passerelle au sol (GW), suivant le deuxième plan de temps de commutation de faisceau (BSTP1), de la demande de changement comprenant le plan de temps de commutation de faisceau demandé (BSTP1), la période de signal de synchronisation correspondante (SS1P) et un temps prédéterminé auquel le changement de plan de temps de commutation de faisceau doit se produire, appelé temps epoch ;
- pour chaque super-trame (SFi) du signal envoyé à l'engin spatial, insérer (102) le nombre *SFNᵢ* associé à la super-trame (SFi) et généré par le compteur de synchronisation au sol (GSC) dans ladite super-trame (SFi), incrémenter le compteur de synchronisation au sol (GSC) pour chaque super-trame (SFi) et remettre à zéro le compteur de synchronisation au sol (GSC) lorsqu'il atteint la période de signal de synchronisation (SS1P) ;
- pour chaque super-trame (SFj) reçue par le récepteur de référence (RR) en provenance de la charge utile (PL) d'engin spatial, calculer la valeur de *modulo*(*SFNⱼ*,*length*(*BSTP*1))+1, *SFNⱼ* étant le nombre associé à la super-trame reçue (SFj) et *length*(*BSTP*1) étant la longueur dans des unités de super-trame (SFi) du deuxième plan de temps de synchronisation de faisceau (BSTP1) ;
- pour chaque super-trame (SFj) reçue par le récepteur de référence (RR) en provenance de la charge utile (PL) d'engin spatial, comparer (103) la valeur de *modulo*(*SFNⱼ*,*length*(*BSTP*1))+1 calculée par le récepteur de référence à un motif attendu, le motif attendu dépendant du nombre de super-trames (REF_SF1) reçues dans la zone de couverture de référence pour le deuxième plan de temps de commutation de faisceau (BSTP1) et de la position de la zone de couverture de référence (REF) dans ledit plan de temps de commutation de faisceau (BSTP1) ;
- lorsque les valeurs calculées par le récepteur de référence correspondent au motif attendu, déterminer (104) la position de signal de synchronisation dans le temps et réinitialiser (105) le compteur de synchronisation au sol (GSC) à une valeur prédéterminée sur la base de la position de signal de synchronisation, dans lequel la réinitialisation du compteur de synchronisation au sol (GSC) à la valeur prédéfinie sur la base de la position de signal de synchronisation (SS) signifie la réinitialisation du compteur de synchronisation au sol et la correction de tout décalage dans la transmission de super-trame, un motif est considéré comme correspondant à un motif donné lorsque ledit motif est observé pour au moins deux plans de temps de commutation de faisceau (BSTP) consécutifs.

2. Procédé selon la revendication 1 comprenant, après détermination (104) de la position de signal de synchronisation dans le temps et réinitialisation (105) du compteur de synchronisation au sol (GSC), l'étape consistant à :
- envoyer une deuxième demande de changement de plan de temps de commutation de faisceau (BSTP) à l'engin spatial (SC) afin que la charge utile (PL) d'engin spatial passe du deuxième plan de temps de commutation de faisceau (BSTP1) à un troisième plan de temps de commutation de faisceau à un temps epoch2 ;
- pour chaque super-trame (SFi) du signal envoyé à l'engin spatial, insérer le nombre *SFNᵢ* associé à la super-trame (SFi) et généré par le compteur de synchronisation au sol (GSC) dans ladite super-trame (SFi), incrémenter pour chaque super-trame (SFi) et remettre à zéro le compteur de synchronisation au sol (GSC) lorsqu'il atteint la période de signal de synchronisation (SS1P) correspondant au deuxième plan de temps de commutation de faisceau (BSTP1) ou au temps epoch2-Δ1 où Δ1 est le délai de transmission entre la passerelle au sol (GW) et l'engin spatial (SC) ;
- pour chaque super-trame (SFj) reçue par le récepteur de référence (RR) en provenance de la charge utile (PL) d'engin spatial à partir de epoch2+Δ2 où Δ2 est le délai de transmission entre l'engin spatial (SC) et le récepteur de référence (RR), calculer la valeur de *modulo*(*SFNⱼ*,*length*(*BSTP*2))+1, *SFNⱼ* étant le nombre associé à la super-trame reçue (SFj) et *length*(*BSTP*2) étant la longueur dans des unités de super-trame (SFi) du troisième plan de temps de synchronisation de faisceau ;
- pour chaque super-trame (SFj) reçue par le récepteur de référence (RR) en provenance de la charge utile (PL) d'engin spatial à partir de epoch2+Δ2 où Δ2 est le délai de transmission entre l'engin spatial (SC) et le récepteur de référence (RR), comparer la valeur de *modulo*(*SFNⱼ*,*length*(*BSTP*2))+1 à un motif attendu, le motif attendu dépendant du nombre de super-trames reçues dans la zone de couverture de référence pour le troisième plan de temps de synchronisation de faisceau et de la position de la zone de couverture de référence (REF) dans ledit plan de temps de synchronisation de faisceau ;
- lorsque les valeurs calculées par le récepteur de référence (RR) correspondent au motif attendu, confirmer la synchronisation avec un compteur de signal de synchronisation (SSC).

3. Procédé selon la revendication 1 ou la revendication 2, le système de transmission (TS) comprenant en outre un terminal utilisateur (UT1, UT2), ledit procédé comprenant, après détermination (104) de la position de signal de synchronisation dans le temps et réinitialisation (105) du compteur de synchronisation au sol (GSC) et/ou confirmation de la synchronisation avec le signal de synchronisation, les étapes consistant à :
- pour chaque super-trame (SFj) reçue par le terminal utilisateur (UT1, UT2) en provenance de la charge utile (PL), calculer la valeur de *modulo*(*SFNⱼ*,*length*(*BSTPi*))+1, *SFNⱼ* étant le nombre associé à la super-trame reçue (SFj) et *length*(*BSTPi*) étant la longueur dans des unités de super-trame (SFi) du plan de temps de synchronisation de faisceau (BSTPi) utilisé par la charge utile (PL) ;
- pour chaque super-trame (SFj) reçue par le terminal utilisateur (UT1, UT2) en provenance de la charge utile (PL), comparer la valeur de *modulo*(*SFNⱼ*,*length*(*BSTPi*))+1 à un motif attendu, le motif attendu dépendant du nombre de super-trames (CA1_Sfi, CA2_SFi) reçues dans la zone de couverture (CA1, CA2) sur laquelle est situé le terminal utilisateur (UT1, UT2) pour le plan de temps de commutation de faisceau (BSTPi) utilisé par la charge utile (PL) et de la position de ladite zone de couverture (CA1, CA2) dans ledit plan de temps de commutation de faisceau (BSTP) ;
- lorsque les valeurs calculées par le terminal utilisateur (UT1, UT2) correspondent au motif attendu, rapporter à la passerelle au sol (GW) la bonne synchronisation du compteur de synchronisation au sol (GSC) avec le compteur de signal de synchronisation (SSC).

4. Procédé selon la revendication 1, la revendication 2 ou la revendication 3 dans lequel le nombre de trames (REF_SF0) reçues dans la zone de couverture de référence pour le premier plan de temps de commutation de faisceau (BSTP0) est différent du nombre de super-trames (REF_SF1) reçues dans la zone de couverture de référence pour le deuxième plan de temps de commutation de faisceau (BSTP1) et/ou a longueur d'unités de super-trame du premier plan de temps de commutation de faisceau (BSTP0) est différente de la longueur d'unités de super-trame pour le deuxième plan de temps de commutation de faisceau (BSTP0).

5. Procédé selon la revendication 1, la revendication 2, la revendication 3 ou la revendication 4 où le motif attendu est donné par un numéro de série *modulo*(*α* + *β* + *k*, *length*(*BSTPi*))+1 où k va de 0 au nombre de super-trames reçues dans la zone de couverture considérée moins un et *length*(*BSTPi*) est la longueur d'unités de super-trame (SFi) du plan de temps de commutation de faisceau (BSTPi) considéré, *α* étant un entier positif dépendant du décalage de position de la zone de couverture considérée dans ledit plan de temps de commutation de faisceau (BSTPi), *β* étant un entier positif, représenté en nombre de super-trames SF et démarrant à zéro, dépendant de la position attendue de la zone de couverture de référence (REF) dans le plan de temps de commutation de faisceau (BSTPi).

6. Procédé selon la revendication 5 où l'étape de détermination (104) de la position de signal de synchronisation dans le temps et de réinitialisation (105) du compteur de synchronisation au sol (GSC) à la valeur prédéterminée sur la base de la position de signal de synchronisation comprend également le retard par α super-trames ou l'anticipation par [*length*(*BSTP*1)*-α*] super-trames (SFi) du signal envoyé par la passerelle au sol (GW).

7. Système de transmission (TS) comprenant un compteur de synchronisation au sol (GSC), une passerelle au sol (GW) comprenant un moyen pour envoyer un signal à la charge utile (PL) d'engin spatial, ledit signal comprenant une séquence continue de super-trames (SFi), chaque super-trame (SFi) étant associée à un nombre *SFNᵢ*, un récepteur de référence (RR) comprenant un moyen pour recevoir le signal provenant de ladite charge utile (PL) d'engin spatial dans une zone de couverture de référence (REF), un canal de communication permettant à la passerelle au sol (GW) de transmettre à l'engin spatial (SC) toute demande de passage d'un plan de temps de commutation de faisceau (BSTP) à un autre, ledit système de transmission comprenant un moyen pour réaliser le procédé de la revendication 1 à la revendication 6.

8. Produit de programme informatique comprenant des instructions pour amener le système de transmission de la revendication 7 à exécuter les étapes du procédé de la revendication 1 à la revendication 6.

9. Support lisible par ordinateur sur lequel est stocké le programme informatique de la revendication 8.
